# EUROPÄISCHE PATENTSCHRIFT

(11) **EP 0 543 006 B1**
(45) Veröffentlichungstag und Bekanntmachung des Hinweises auf die Patenterteilung: **18.09.1996**
(21) Anmeldenummer: 92924463.0
(22) Anmeldetag: 05.06.1992
(51) Int. Cl.: G01F 23/28, B06B 1/06

(54) **VORRICHTUNG ZUR FESTSTELLUNG UND/ODER ÜBERWACHUNG EINES VORBESTIMMTEN FÜLLSTANDES IN EINEM BEHÄLTER**
DEVICE FOR DETECTING AND/OR MONITORING A PREDETERMINED LEVEL IN A CONTAINER
DISPOSITIF POUR LA DETERMINATION ET/OU LE CONTROLE D'UN NIVEAU DETERMINE DANS UN RECIPIENT

(30) Priorität: 07.06.1991 DE 4118793
(43) Veröffentlichungstag der Anmeldung: 26.05.1993
(73) Patentinhaber: Endress u. Hauser GmbH u. Co., D-79689 Maulburg (DE)
(72) Erfinder: PFÄNDLER, Martin, D-7864 Maulburg (DE)
(86) Internationale Anmeldenummer: DE9200460
(87) Internationale Veröffentlichungsnummer: WO9221945

(56) Entgegenhaltungen:
- DE-A- 2 809 820
- DE-C- 3 931 453
- US-A- 3 472 063

## Beschreibung

Die Erfindung betriff eine Vorrichtung zur Feststellung und/oder Überwachung eines vorbestimmten Füllstandes in einem Behälter.

In der DE-C 39 31 453 ist eine Vorrichtung zur Feststellung und/oder Überwachung eines vorbestimmten Füllstandes in einem Behälter beschrieben
- mit einem in den Behälter einzuschraubenden und einen zylindrischen Hohlraum aufweisenden Einschraubstück,
- mit einer den Hohlraum abschließenden Membran,
   -- deren Rand auf der dem Behälterinneren zugewandten Seite des Einschraubstücks an letzterem eingespannt ist,
- mit zwei in das Behälterinnere ragenden und voneinander beabstandet an der Membran befestigten Schwingstäben,
- mit einem stapelförmigen Wandler, der
   -- aus je einem endseitigen Metallring,
   -- aus einem zwischen den Metallringen angeordneten Erregungswandler,
   -- der ein piezoelektrisches Element zur Erregung der Schwingstäbe in gegensinnige Schwingungen quer zu ihrer Längsachse aufweist, und
   -- aus einem zwischen den Metallringen angeordneten Empfangswandler besteht,
      --- der zwei piezoelektrische Elemente zum Umwandeln der Schwingungen in ein elektrisches Ausgangssignal aufweist,
      --- und welcher Wandler im Hohlraum angeordnet ist und sich auf der Membran über am einen Metallring angeformte Druckzapfen abstützt,
      --- die gleichverteilt auf einem Kreisring angeordnet sind,
- mit einer auf der schwingstäbe-abgewandten Seite der Membran fest mit ihr verbundenen, den Wandler durchdringenden Spannschraube und
- mit einer an der membran-abgewandten Seite der Spannschraube gegen den Wandler geschraubten Mutter,
   -- wobei die von den beiden piezoelektrischen Elementen erzeugten Längenänderungen des Erregungswandlers sich auf die Membran übertragen und
   -- die Membran durch Festziehen der Mutter unter gleichzeitiger Ausrichtung und Befestigung des Wandlers vorgespannt ist.

Diese Vorrichtung hat den Nachteil, daß eine genaue Ausrichtung der Druckzapfen zum Antrieb des Schwingungssystems erforderlich und ein Verkanten des Wandlers bei dessen Einbau möglich ist.

Die in den Ansprüchen definierte Erfindung vermeidet diese Nachteile und hat den Vorteil, daß durch die volle Ausnutzung des Membrandurchmessers ein größerer Wirkungsgrad des Wandlers und eine größere Unempfindlichkeit gegenüber Fremdvibrationen als bei der vorbeschriebenen Anordnung gegeben sind. Ein weiterer Vorteil der Erfindung ist, daß die aufgrund der Längenänderung der piezoelektrischen Elemente auf die Membran wirkenden Momente vergrößert sind und dadurch eine Erhöhung der Schwingungsamplitude der Schwingstäbe erreicht wird.

Die Erfindung wird nun anhand von in den Figuren der Zeichnung dargestellten Ausführungsbeispielen näher erläutert.
- Fig. 1 zeigt: einen teilweisen Längsschnitt durch eine Vorrichtung, und
- Fig. 2 zeigt: einen vergrößerten Längsschnitt durch das Einschraubstück der Vorrichtung von Fig. 1.

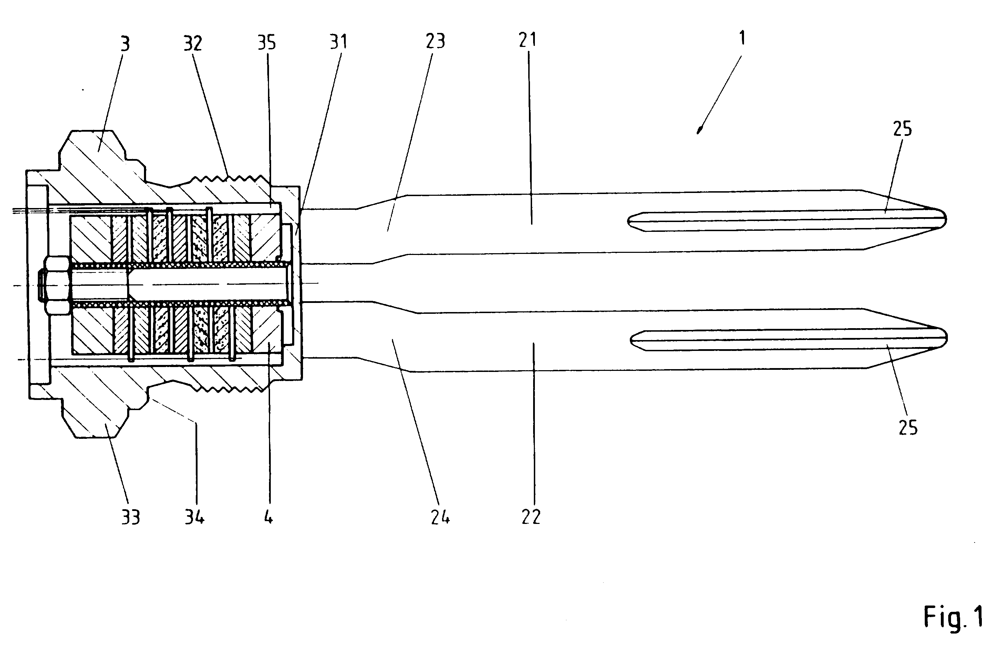

In Fig. 1 ist unter 1 eine Vorrichtung zur Feststellung und/ oder Überwachung eines vorbestimmten Füllstandes dargestellt. Sie besteht aus Schwingstäben 21, 22, einem Einschraubstück 3 und einem Wandler 4. Die Schwingstäbe 21, 22 ragen in das Innere eines nicht dargestellten Behälters, dessen Füllstand mittels der Vorrichtung 1 festgestellt oder überwacht werden soll. Sie sind von gleicher Form und lediglich gegeneinander um ihre Längsachse 180 Grad gedreht angeordnet. Beide Schwingstäbe, sind auf der vom Behälterinneren abgewandten Seite fest mit einer Membran 31 verbunden, welche den Hohltamin 35 des Einschraubstückes 3 zum Behälterinneren hin abschließt. Jeder der Schwingstäbe 21, 22 ist mit einer Kröpfung 23, 24 versehen, so daß die im wesentlichen parallel nebeneinander liegenden Hauptteile der Schwingstäbe einen größeren Abstand voneinander haben als die mit der Membran verbundenen Enden. Durch die Kröpfungen 23, 24 wird bewirkt, daß von der Membran 31 noch mitübertragene Reste von longiditunalen Schwingungen ebenfalls in quer zu den Schwingstäben gerichtete Schwingungen umgewandelt werden. Die Hauptteile der Schwingstäbe haben einen runden Querschnitt und sind an den freien Enden zugespitzt. Die Kröpfumgen 23, 24 verbreitern sich zu einem größeren unrunden Querschnitt an der Verbindungsstelle mit der Membran 31.

Am freien Ende jedes Schwingstabes 21, 22 ist ein Paddel 25 senkrecht zu der die Achsen der Schwingstäbe enthaltenden Ebene angebracht. Jedes der Paddel 25 erstreckt sich vom freien Ende des Schwingstabes über eine verhältnismäßig große Länge, die zwischen 40 und 60 % dieser Länge beträgt. Dagegen ist die Breite jedes Paddels senkrecht zur Längsachse des Schwingstabes wesentlich kleiner als die Längenausdehnung. Diese Breite der Paddel 25 und die Kröpfungen 23, 24 sind so aufeinander abgestimmt, daß die Schwingstäbe 21, 22 mit den daran angebrachten Paddeln 25 durch eine Öffnung hindurchgeführt werden können, die in die nicht dargestellte Behälterwand eingebracht worden ist. Trotz der dadurch bedingten verhältnismäßig geringen Breite der Paddel 25 ergibt sich infolge der großen Längenausdehnung der Paddel eine große wirksame Paddelfläche.

Das Einschraubstück 3 ist von zylindrischer Form und weist ein zylindrisches Außengewinde 32 auf, mit welchem die Vorrichtung 1 in der nicht dargestellten Wand des Behälters, befestigt ist. Dazu durchdringt eine Bohrung die Behälterwand und ist mit einem zylindrischen Innengewinde versehen. Zum Einschrauben der Vorrichtung 1 in die Behälterwand ist an dem Einschraubstück 3 ein Sechskant 33 angeformt, dessen Flächenabstand der Schlüsselweite eines Schraubenschlüssels entspricht. Der druckdichte Verschluß wird durch eine ringförmige Dichtfläche 34 gewährleistet und geschieht unter Zwischenfügung einer nicht dargestellten ringförmigen Dichtung. Das Innere des Einschraubstückes 3 durchdringt auf der von den Schwingstäben 21, 22 abgewandten Seite ein zylindrischer Hohlraum 35, dessen axiale Erstreckung so gewählt ist, daß lediglich ein geringes Reststück des Einschraubstückes 3 nicht durchdrungen wird, welches die Membran 31 der Vorrichtung 1 bildet. Der Wandler 4 ist in dem zylindrischen Hohlraum 35 des Einschraubstückes 3 untergebracht.

Vorzugsweise sind die Schwingstäbe 21, 22, die Paddel 25, das Einschraubstück 3 und die Membran 31 als einstückiges metallisches Formteil hergestellt.

Selbstverständlich kann der Einbau der Vorrichtung 1 an jeder beliebigen Stelle des Behälters erfolgen, so z.B. in der Wand oder in dem Deckel, je nachdem wie die Messung und/oder Überwachung des Füllstandes erfolgen soll.

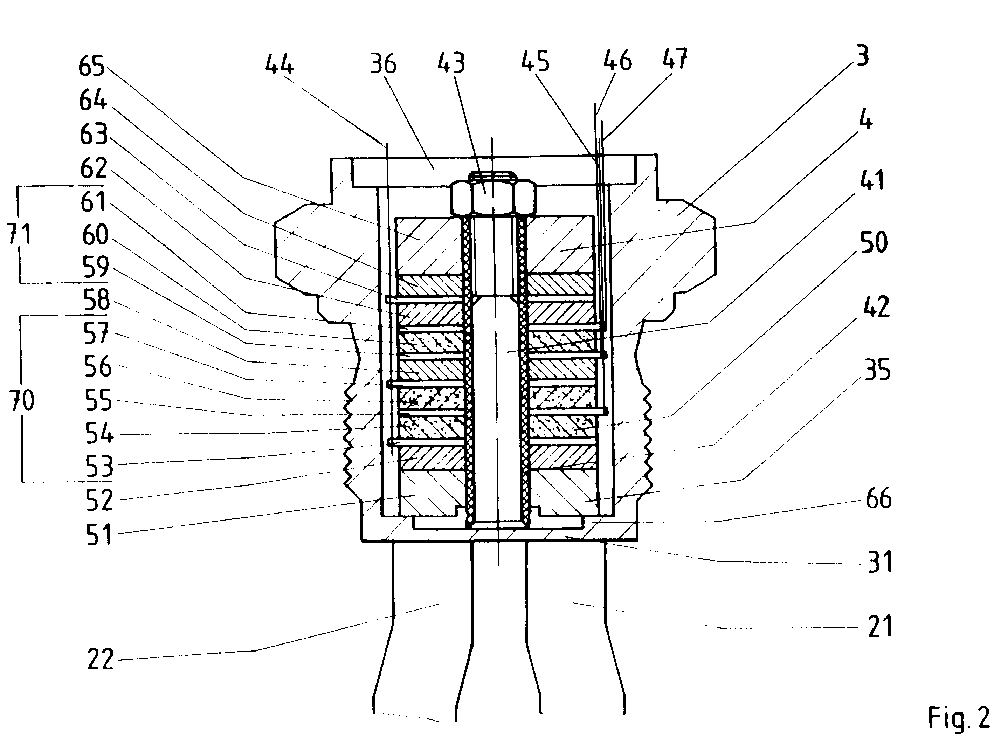

Der Aufbau des Wandlers 4 ist in Fig. 2 gezeigt. Eine Spannschraube 41 ist fest mit der Membran 31 verbunden. Dies kann auf jede dem Fachmann bekannte Art, wie Schweißen, Kleben usw., erfolgen. Die Spannschraube 41 kann aber auch Teil des einstückigen metallischen Formteils sein, als welches das Einschraubstück 3 einschließlich der Schwingstäbe 21, 22 vorzugsweise hergestellt werden kann.

Die Spannschraube 41 ist so an der Membran 31 angeordnet, daß ihre Symmetrieachse mit der der Membran 31 zusammenfällt, und ragt in den zylindrischen Hohlraum 35. Der Wandler 4 besteht aus einem Isolierrohr 42, einer Mutter 43, Verbindungsleitungen 44, 45, 46, 47 sowie einem Piezostapel 50 mit den folgenden Bestandteilen:
- Metallring 51
- Isolierring 51
- Elektrodenring 53
- ringförmiges piezoelektrisches Element 54
- Elektrodenring 55
- ringförmiges piezoelektrisches Element 56
- Elektrodenring 57
- Isolierring 58
- Elektrodenring 59
- ringförmiges piezoelektrisches Element 60
- Elektrodenring 61
- Isolierring 62
- Elektrodenring 63
- Isolierring 64
- Metallring 65

Darin bilden die Elektrodenringe 53, 55, 57 sowie die ringförmigen piezoelektrischen Elemente 54, 56 einen Erregungswandler 70, die Elektrodenringe 59, 61 sowie das piezoelektrische Element 60 einen Empfangswandler 71 des Wandlers 4. Das Isolierrohr 42 bildet die elektrische Isolierung der Spannschraube 41 gegenüber den Bestandteilen des Piezostapels 50.

Alle Bestandteile des Piezostapels haben bei dem dargestellten Beispiel vorzugsweise den gleichen ringförmigen Querschnitt, so daß der Stapel zylindrisch ist und von der Spannschraube 41 geführt wird.

An jedem Elektrodenring ist noch eine aus dem Piezostapel 50 herausragende Lötfahne angeformt. Die Metallringe 51 und 65 bestehen vorzugsweise aus Messing und dienen einerseits als Abstandsstücke zur Erzielung der erforderlichen Länge des Piezostapels 50 zwischen der Membran 31 und der Mutter 43 und andererseits zur Übertragung der Kräfte auf die übrigen Bestandteile des Stapels. Insbesondere dienen die Metallringe 51, 65 dazu, daß der von der Mutter erzeugte Flächendruck parallel auf die piezoelektrischen Elemente 54, 56, 60 übertragen wird und damit eine Biegung der sehr bruchempfindlichen piezoelektrischen Elemente ausgeschlossen ist. Der Metallring 51 bewirkt, daß die von der Vorspannung und den Schwingungen stammenden Verbiegungen der Membran 31 nicht auf die piezoelektrischen Elemente 54, 56, 60 übertragen werden. Auch diese Maßnahme verhindert, daß die bruchempfindlichen piezoelektrischen Elemente auf Biegung beansprucht werden.

Die innere Kreisfläche der Membran 31 erstreckt sich radial nicht bis an die Mantelfläche des Hohlraumes 35,sondern ist von kleinerem Durchmesser. An der Innenseite der Membran 31 erstreckt sich in axialer Richtung eine kurze zylindrische Ausnehmung in der von den Schwingstäben 21, 22 abgewandten Richtung. Die Mantelfläche dieser zylindrischen Ausnehmung fällt mit der Umfangsfläche der Membran-Innenseite zusammen und bildet durch die Durchmesserdifferenz zu dem Hohlraum 35 eine Schulter 66. Diese ist von kreiszylindrischem Querschnitt und die Umfangslinie fällt mit der Mantelfläche des Hohlraumes 35 zusammen.

Die Schulter 66 dient dazu, die von Erregungswandler 70 ausgehenden Längenänderungen der piezoelektrischen Elemente 64, 56 auf die Membran 31 zu übertragen. Dazu stützt sich der Metallring 51 mit einer Kreisringfläche auf einer Kreisringfläche der Schulter 66 ab.

Die mit Hilfe der Mutter 43 erzeugte Vorspannung der Membran 31 wird auch über die sich abstützende Kreisringfläche des Metallringes 51 auf die Kreisringfläche der Schulter 66 und damit auf die Membran 31 übertragen.

In axialer Fortsetzung des Einschraubstückes 3 ist an diesem auf der von den Schwingstäben 21, 22 abgewandten Seite ein nicht dargestellter Elektronikkopf angeordnet. Er enthält die elektronische Schaltung der Vorrichtung 1. Er ist von einem Gehäuse umgeben. Die zylindrische Ausnehmung 36, welche sich auf der von den Schwingstäben abgewandten Seite ein Stück axial erstreckt und einen größeren Durchmesser als der Hohlraum 35 aufweist, dient der Aufnahme des Elektronikkopfgehäuses. Die nicht dargestellte elektronische Schaltung ist über die Verbindungsleitungen 44, 45, 46, 47 mit dem Wandler 4 elektrisch verbunden.

Der Erregungswandler 70 wandelt eine von der elektrischen Schaltung über die Verbindungsleitungen 44, 45 gelieferte Wechselspannung in mechanische Schwingungen der Schwingstäbe 21, 22 um. Die beiden Elektrodenringe 53 57 sind mit dem einen Pol der Wechselspannungsquelle, vorzugsweise Masse, verbunden, und der Elektrodenring 55 ist an deren anderen Pol angeschlossen. Die piezoelektrischen Elemente 54, 56 sind daher elektrisch parallel und mechanisch in Serie geschaltet. Infolge der angelegten Wechselspannung erfährt jedes der piezoelektrischen Elemente 54, 56 eine Verformung (Dickenänderung) in der Achsrichtung des Piezostapels 50, die der angelegten Spannung proportional ist.

Die mechanischen Verformungen der piezoelektrischen Elemente 54, 56 addieren sich, so daß für eine gegebene Größe der angelegten Wechselspannung eine Verdoppelung der Längenänderung des Piezostapels 50 erzielt wird.

Der Empfangswandler 71 wandelt die mechanischen Schwingungen der Schwingstäbe 21, 22 und der Membran 31 in ein elektrisches Ausgangssignal um, welches der elektronischen Schaltung über die. Verbindungsleitungen 46, 47 zugeführt wird. Der Elektrodenring 63 liegt an Masse und dient zur Abschirmung des Empfangswandlers 71. Zur Abschirmung des Empfangswandlers 71 auf dessen anderer Seite wird die Tatsache ausgenutzt, daß der benachbarte Elektrodenring 57 des Erregungswandlers 70 an Masse liegt.

Die Funktion des Wandlers 4 soll im folgenden erläutert werden. Infolge der - durch die Spannschraube 41 und die Mutter 43 über den Piezostapel 50 und die Metallringe 51 auf der Schulter 66 und damit auf der Membran 31 - erzeugten Vorspannung ist die Membran 31 durchgebogen, wodurch die Schwingstäbe 21 und 22 nach innen verschwenkt sind. Die Vorspannkraft wird damit nur von der Membran 31 elastisch aufgenommen, und die Federwirkung der Membran 31 gleicht auch unterschiedliche Wärmeausdehnungen aus.

Wenn der Piezostapel 50 infolge der an den Erregungswandler 70 angelegten Wechselspannung gegenüber seiner Ruhelage vergrößert ist, wird die vorgespannte Membran 31 noch weiter durchgebogen, wodurch die Schwingstäbe 21 und 22 weiter nach innen geschwenkt werden. Wenn dagegen in der anderen Halbperiode der Wechselspannung die Länge des Piezostapels 50 gegenüber seiner Ruhelänge verkürzt ist, können die Schwingstäbe 21, 22 nach außen schwingen, während die Durchbiegung der Membran 31 zunächst zurückgeht und dann, je nach der eingestellten Vorspannung, in eine entgegengesetzte Durchbiegung übergehen kann.

Die Durchbiegung ist in Wirklichkeit sehr klein und kann beispielsweise in der Größenordnung von einigen Mikrometern liegen.

Für den Fachmann ist erkennbar, daß durch die Wirkung des Erregungswandlers 70 in dem Piezostapel 50 die Schwingstäbe 21, 22 in gegensinnige Schwingungen quer zu ihren Längsachsen in gemeinsamen Ebenen, die die Längsachsen enthalten, versetzt werden. Der dargestellte Aufbau und die Bemessung der Teile ergibt eine große Übersetzungswirkung, so daß die zur Erzielung einer ausreichenden Schwingungsamplitude erforderliche Verformung der piezoelektrischen Elemente 54, 56 sehr klein ist. Infolge der Gegensinnigkeit der Schwingungen heben sich die von jedem Schwingstab 21, 22 auf die Einspannung der Membran 31 ausgeübten Wechselkräfte auf, so daß keine Schwingungsenergie durch Übertragung auf das Einschraubstück 3 und die nicht dargestellte Behälterwand verloren geht.

Die Rückholfeder des aus den Schwingstäben 21, 22 und der Membran 31 gebildeten mechanischen Schwingungssystem ist durch die Membran 31 gebildet. Die Masse des mechanischen Schwingungssystems besteht einerseits aus der Masse der Schwingstäbe 21, 22 und andererseits aus der von ihnen bei der Schwingbewegung mitgenommenen Masse des umgebenden Mediums. Diese mitgenommene Masse wird durch die quer zu der Schwingungsrichtung angeordneten Paddel 25 vergrößert. Die Eigenresonanzfrequenz des mechanischen Schwingungssystems hängt einerseits von der Federkonstante des Federsystems ab, die als konstant angenommen werden kann, und andererseits von der Gesamtmasse, die in Abhängigkeit von der mitgeführten Masse veränderlich ist.

Wenn sich die Schwingstäbe 21, 22 mit ihren Paddeln 25 in Luft befinden, ist die mitgeführte Masse der Luft vernachlässigbar, und es stellt sich eine Eigenresonanzfrequenz ein, die im wesentlichen durch die Masse der Schwingstäbe 21, 22 und die Membrandicke 31 bestimmt ist. Wenn dagegen die Schwingstäbe 21, 22 mit ihren Paddeln 25 in ein Füllgut eintauchen, ändert sich die mitgeführte Masse und damit die Eigenresonanzfrequenz des mechanischen Schwingungssystems.

Die dargestellte Form der Paddel 25 ergibt unter Berücksichtigung der durch das Einschraubloch in der Behälterwand vorgegebenen Beschränkung der Breite eine optimale Wirkung. Es hat sich gezeigt, daß die durch die weitere Verlängerung der Paddel 25 über 60 % der Schwingstablänge hinaus erzielte Flächenvergrößerung keine wesentliche Verbesserung hinsichtlich der Frequenzänderung mehr ergibt.

Die Erregung der Schwingungen des mechanischen Schwingungssystems erfolgt stets mit seiner Eigenresonanzfrequenz, auch wenn diese sich ändert. Dies geschieht nach einem üblichen Verfahren dadurch, daß das mechanische Schwingungssystem selbst als frequenzbestimmendes Glied eines elektrischen Schwingungserzeugers dient. Zu diesem Zweck sind die beiden Elektrodenringe 59, 61 des Empfangswandlers 71 mit dem Eingang eines nicht dargestellten Verstärkers verbunden, an dessen Ausgangsklemmen einerseits die Elektrodenringe 53, 57 und andererseits der Elektrodenring 55 des Erregungswandlers 70 angeschlossen sind. Die Frequenz der an den Erregungswandler 70 angelegten Wechselspannung folgt daher stets der Eigenresonanzfrequenz des mechanischen Schwingungssystems.

Es hat sich gezeigt, daß sich mit dem beschriebenen Aufbau des Schwingungssystems 21, 22, 31 und des Wandlers 4 bereits bei sehr geringfügigen Änderungen der mitgeführten Masse eine ausgeprägte Änderung der Eigenresonanzfrequenz ergibt. Diese ausgeprägte Änderung tritt auch bei den durch die Vorspannung der Membran 31 verursachten größeren Schwingungsamplituden der Schwingstäbe 21, 22 auf.

Die in Abhängigkeit vom Ausgangssignal des Empfangswandlers 71 gesteuerte, nicht dargestellte Einrichtung zur Auslösung von Anzeige- und/oder Schaltvorgängen ist vorzugsweise so ausgebildet, daß sie auf Frequenzänderungen anspricht. Es ist aber auch ohne weiteres möglich, die von dem Ausgangssignal des Empfangswandlers gesteuerte Einrichtung so auszulegen, daß sie auf Änderungen der Amplitude der Schwingstäbe 21, 22 anspricht. Unabhängig von der Auswertung der Frequenz- oder Amplitudenänderung genügt eine verhältnismäßig kleine Wechselspannung zur Ansteuerung des Erregungswandlers. Es hat sich gezeigt, daß mit der beschriebenen Ausbildung eine Anregungsspannung von 10 V zur Erzielung der Ansprechempfindlichkeit genügt. Diese niedrige Anregungsspannung ist insbesondere bei Anwendungen in explosionsgefährdeten Bereichen vorteilhaft.

Verbunden mit dieser niedrigen Anregungsspannung und der durch die Vorspannung der Membran 31 verursachten größeren Schwingungsamplitude der Schwingstäbe 21, 22 ist eine geringe erforderliche Anregungsleistung, die den Aufbau der elektronischen Schaltung vereinfacht und verbilligt. Auch kann der Ansprechpunkt sehr genau eingestellt werden. So ist es beispielsweise möglich, den Übergang zwischen Luft und einem Schaum oder zwischen einem Schaum und einer Flüssigkeit zu detektieren.

## Patentansprüche

1. Vorrichtung zur Feststellung und/oder Überwachung eines vorbestimmten Füllstandes in einem Behälter
- mit einem in den Behälter einzuschraubenden und einen zylindrischen Hohlraum aufweisenden Einschraubstück (3),
- mit einer den Hohlraum (35) abschließenden Membran (31),
-- deren Rand auf der dem Behälterinneren zugewandten Seite des Einschraubstücks (3) an letzterem eingespannt ist und
-- an deren Rand auf der hohlraum-zugewandten Seite eine Schulter (66) angeformt ist,
- mit mindestens zwei in das Behälterinnere ragenden und voneinander beabstandet an der Membran befestigten Schwingstäben (21, 22),
- mit einem stapelförmigen Wandler (4), der
-- aus je einem endseitigen Metallring (51, 65),
-- aus einem zwischen den Metallringen angeordneten Erregungswandler (70),
--- der mindestens ein piezoelektrisches Element (54, 56) zur Erregung der Schwingstäbe in gegensinnige Schwingungen quer zu ihrer Längsachse aufweist, und
-- aus einem zwischen den Metallringen angeordneten Empfangswandler (71) besteht,
--- der mindestens ein piezoelektrisches Element (60) zum Umwandeln der Schwingungen in ein elektrisches Ausgangssignal aufweist,
-- und welcher Wandler (4) sich im Hohlraum befindet und sich auf der Schulter (66) abstützt,
- mit einer auf der schwingstäbe-abgewandten Seite der Membran (31) fest mit ihr verbundenen, den Wandler (4) durchdringenden Spannschraube (41) und
- mit einer an der membran-abgewandten Seite der Spannschraube gegen den Wandler geschraubten Mutter (43),
-- wobei die von dem mindestens einen piezoelektrischen Element (54, 56) erzeugten Längenänderungen des Erregungswandlers (70) sich auf die Membran (31) übertragen und
-- die Membran (31) durch Festziehen der Mutter (43) unter gleichzeitiger Ausrichtung und Befestigung des Wandlers (4) vorgespannt ist.

2. Vorrichtung nach Anspruch 1, bei der die Schulter (66) ringförmig ist.

3. Vorrichtung nach Anspruch 1, bei der der Wandler (4) aus einem Stapel besteht, der die endseitigen Metallringe (51, 65), ringförmige piezoelektrische Elemente (54, 56, 60), Elektrodenringe (53, 55, 57, 59, 61, 63) und Isolierringe (52, 58, 62, 64) umfaßt.

4. Vorrichtung nach den Ansprüchen 1 und 3 mit zwei elektrisch parallel- und mechanisch in Serie geschalteten piezoelektrischen Elementen (54, 56).

## Claims

1. A device for detecting and/or monitoring a predetermined level in a tank, comprising
- a screw-in piece (3) to be screwed into the tank and having a cylindrical hollow space;
- a diaphragm (31) closing the hollow space (35),
-- whose edge on the side of the screw-in piece (3) facing toward the interior of the tank is clamped to the screw-in piece (3), and
-- whose edge on the side facing toward the hollow space has a shoulder (66) integrally formed thereon;
- at least two vibration rods (21, 22) projecting into the interior of the tank and fixed to the diaphragm at a distance from each other;
- a stack-shaped transducer (4) comprising
-- a respective metal ring (51, 65) at each of its ends,
-- an excitation transducer (70) disposed between the metal rings
--- which comprises at least one piezoelectric element (54, 56) for exciting vibration rods into opposite vibrations perpendicular to their longitudinal axis, and
-- a receiving transducer (71) disposed between the metal rings
--- which comprises at least one piezoelectric element (60) for converting the vibrations into an electric output signal,
-- said transducer (4) being located in the hollow space and supported by the shoulder (66);
- a clamping bolt (41) permanently connected with the diaphragm (31) on the side of the diaphragm (31) remote from the vibration rods and extending through the transducer (4); and
- a nut (43) screwed against the transducer on the side of the clamping bolt remote from the diaphragm,
-- the changes in the length of the excitation transducer (70), which are caused by said at least one piezoelectric element (54, 56), being transmitted to the diaphragm (31), and
-- the diaphragm (31) being pretensioned by tightening the nut (43), with the transducer (4) being aligned and locked in position.

2. A device as claimed in claim 1 wherein the shoulder (66) is ring-shaped.

3. A device as claimed in claim 1 wherein the transducer (4) is constituted by a stack comprising the metal rings (51, 65) at the ends, annular piezoelectric elements (54, 56, 60), electrode rings (53, 55, 57, 59, 61, 63), and insulating rings (52, 58, 62, 64).

4. A device as claimed in claims 1 and 3, comprising two piezoelectric elements (54, 56) which are electrically connected in parallel and mechanically in series.

## Revendications

1. Dispositif servant à constater et/ou à surveiller un niveau de remplissage prédéterminé dans un récipient,
- comprenant une pièce filetée (3) se vissant dans le récipient et présentant une cavité cylindrique,
- comprenant une membrane (31) obturant la cavité (35),
-- membrane dont le bord est encastré au niveau de la pièce filetée (3), sur le côté de cette dernière tourné vers l'intérieur du récipient,
-- bord de membrane sur lequel un épaulement (66) est formé sur le côté tourné vers la cavité,
- comprenant au moins deux tiges oscillatrices (21, 22) fixées à la membrane, faisant saillie à l'intérieur du récipient et espacées l'une de l'autre,
- comprenant un transducteur (4) en forme de pile
-- se composant à chaque fois d'une bague métallique d'extrémité (51, 65),
-- se composant d'un transducteur d'excitation (70) disposé entre les bagues métalliques,
--- lequel transducteur d'excitation présente au moins un élément piézoélectrique (54, 56) pour exciter les tiges oscillatrices suivant des oscillations de sens contraire, transversalement par rapport à l'axe longitudinal des tiges,
-- se composant d'un transducteur récepteur (71) disposé entre les bagues métalliques,
--- lequel transducteur récepteur présente au moins un élément piézoélectrique (60) pour transformer les oscillations en un signal de sortie électrique,
-- et lequel transducteur (4) se trouve dans la cavité et est en appui contre l'épaulement (66),
- comprenant, sur le côté de la membrane (31) opposé aux tiges oscillatrices, une vis de serrage (41) reliée fixement à la membrane et traversant le transducteur (4), et
- comprenant, sur le côté de la vis de serrage opposé à la membrane, un écrou (43) vissé sur le transducteur,
-- où les modifications de longueur du transducteur d'excitation (70), produites par au moins un élément piézoélectrique (54, 56), se transmettent à la membrane (31), et
-- où la membrane (31) est pré-tendue par le serrage de l'écrou (43) et sous l'effet simultané de l'alignement et de la fixation du transducteur (4).

2. Dispositif selon la revendication 1, dans lequel l'épaulement (66) est de forme annulaire.

3. Dispositif selon la revendication 1, dans lequel le transdudteur (4) se compose d'une pile qui comprend les bagues métalliques d'extrémité (51, 65), des éléments piézoélectriques (54, 56, 60) de forme annulaire, des anneaux d'électrodes (53, 55, 57, 59, 61, 63) et des anneaux isolants (52, 58, 62, 64).

4. Dispositif selon les revendications 1 et 3 comprenant deux éléments piézoélectriques (54, 56) connectés électriquement de façon parallèle et montés mécaniquement en série.
